# EUROPEAN PATENT SPECIFICATION

(11) **EP 4 257 005 B1**
(45) Date of publication and mention of the grant of the patent: **31.07.2024**
(21) Application number: 22180107.9
(22) Date of filing: 21.06.2022
(51) Int. Cl.: A45C 11/18, A45C 13/10, A45C 11/00

(54) **DETACHABLE PHONE WALLET**
ABNEHMBARE BRIEFTASCHE FÜR MOBILTELEFON
PORTEFEUILLE DETACHABLE POUR TELEPHONE PORTABLE

(30) Priority: 04.04.2022 US 202217712581
(43) Date of publication of application: 11.10.2023
(73) Proprietor: Fosmon IP Holding Company, LLC, Woodbury, MN 55129 (US)
(72) Inventor: Tan, Feon, Woodbury (US); Loh, Shung Yat, Woodbury (US); Lee, Ho Yin, Woodbury (US); Heun, Ping Hay, Woodbury (US); Wong, Chee Shyong, Woodbury (US)
(74) Representative: Potter Clarkson

(56) References cited:
- WO-A1-2021/044149
- FR-A1- 3 061 423
- US-B1- 11 240 365
- US-B1- 9 768 822

## Description

### TECHNICAL FIELD

The present invention relates generally to wallets that attach to electronic devices. More particularly, the present invention relates to a phone wallet that unobtrusively and easily detaches and reattaches to an electronic device while concealing an opening to the wallet and while providing a support stand when attached to the phone. The present invention further relates to a non-intrusive mobile phone protective case having a pocket adapted for receiving the detachable phone wallet therein. The phone wallet is easily removed to allowing for wireless charging of the mobile device without removing the casing.

### BACKGROUND

Over the years features and functions of mobile electronic devices and accessories for those devices have progressed. By way of example, recent advances have been incorporated into mobile phones to allow the battery in the device to be charged wirelessly. However, mobile electronic devices, such as cellular phones, tablets and laptops often include an external housing that may shatter or sustain damage from an impact. The damage from impact may result in a cracked screen, scratches on a finished surface, and/or failed or malfunctioning electrical components. Complimentary casings have been provided to reduce potential damage from impact. However, in the past, these complimentary casings must be removed in order to charge the batteries in the phone wirelessly. Accordingly, there is a desire to provide a protective case that allows the phone batteries to be charged wirelessly without the need to remove the protective casing from the phone.

Further, although carrying devices such as purses or fanny packs have been used to both carry and protect the mobile devices, some users have preferred to eliminate the bulk of a purse or fanny pack while still carrying the phone and a small organizer of a few personal belongings such as ID's, cash, or credit cards. Having two small, uncontained items increases the chance that one is set down and forgotten or otherwise misplaced. Accordingly, there is a desire to couple the personal electronic device and small organizer together while also being able to quickly decouple the electronic device and organizer. An example of such a coupling is known from US 9 768 822 B1, which discloses: a detachable phone wallet apparatus for coupling to an electronic device, the phone wallet apparatus comprising: a rigid body having a cavity formed therein; a hinged panel having a first end portion fixed to an outer surface of the rigid body and a second free end portion that is adapted to extend over and cover a first open end of the cavity; alignment magnets; panel magnets associated with one of the hinged panel and the rigid body; and the hinged panel including a plurality of hinged folds.

### SUMMARY

The present invention relates to a detachable phone wallet apparatus and is defined by the appended claims. Embodiments according to aspects of the present invention provide a detachable phone wallet that quickly magnetically couples and decouples with a smart phone. These embodiments further provide a phone wallet that has a hinged storage compartment cover that may be used as a stand when coupled to a phone. In certain embodiments according to aspects of the invention the detachable phone wallet fits within a pocket formed in a protective covering that protects the phone by encompasses the sides and back of the smart phone. The multi hinged panel or cavity may be utilized to conceal the storage compartment and may also be altered to prop up or stand the electronic device at a desired angle. A further aspect of the invention allows a wireless charger to be linked to phone through the pocket of the protective casing.

The detachable phone wallet in accordance with aspects of the present invention includes a rigid body having a cavity formed therein and a hinged panel that covers an open end of the cavity. The hinged panel has a first end portion fixed to an outer surface of the rigid body and a second free end portion that is adapted to extend over and cover the open end of the cavity. The cavity terminates in the rigid body at a base portion of the rigid body, thereby forming a second closed end of the cavity. The base portion includes a backing portion that forms an exterior of the rigid body. Alignment magnets are sandwiched between the base portion and backing portion of the closed end of the cavity of the rigid body. Those skilled in the art will appreciate that the base portion and backing portion may be constructed as layers attached to the remaining portion of the rigid body or may be manufactured integral with the rigid body. When manufactured integral with the rigid body the alignment magnets are embedded during the manufacture of the rigid body. Panel magnets are associated with either or both of the hinged panel and the rigid body to provide fixation of the hinged panel when covering the cavity. The hinged panel further includes a plurality of hinged folds.

In embodiments of the invention the detachable phone wallet may further include ferromagnetic metal strips associated with the hinged panel that attract to panel magnets positioned on the rigid body. Also, hinged folds may be defined by a plurality of hinged joints. The open end of the cavity may include flanges extending from the rigid body that provides additional support to the hinged panel when covering the cavity. Also, ramps may be formed on the cavity sidewalls to facilitate insertion and removal of credit and ID cards relative to the cavity. Additionally, the phone wallet may insert into a pocket formed in a protective casing. The casing has a pliable body and a rim extending outward from the pliable body, wherein the rim of the pliable body is adapted for engaging sides of an electronic device. Those skilled in the art will appreciate that the pliable quality is considered relative to the wallet's rigid body. Thus, the pliable body is considered pliable if it is able to be manipulated enough to slip over the sides of a phone and encase the phone sides.

In accordance with aspects of the invention, an embodiment of the invention includes a rigid body, a panel cover, alignment magnets, panel cover magnets, and a phone protective casing. The rigid body has a cavity formed therein such that the rigid body has an open end or open front and a closed end or closed back side. The closed end or back side of the rigid body is comprised of a base portion or layer and a backing portion or layer. The alignment magnets are sandwiched between the base portion and backing portion of the rigid body and the backing portion forms an exterior of the rigid body. The backing portion and base portion may be layers or films applied to the rigid body or may be integral with the rigid body. The hinge panel has a first end portion that is fixed to an outer surface of the rigid body and further has a second free end portion that is adapted to extend over and cover the open end of the cavity. The protective phone casing extends outward in the same plane as the back face of the rigid body and includes a rim extending orthogonally about a perimeter of the casing. The dimensions of the planar casing and rim are such so that sides of a phone may be encompassed, engaged, and encased by the rim. The protective casing further includes a pocket that is dimensioned and adapted to receive and couple the rigid body within the pocket.

In certain aspects of this embodiment of the invention the detachable phone wallet may further include metal strips associated with the hinged panel and magnets associated with the rigid body. In this manner the magnets may hold the hinge panel in place when the panel is covering the open cavity of the rigid body. The rigid body may further include flanges that block outer access to a portion of the cavity and provide support to the hinge panel. The protective casing may include one or more apertures extending through the casing that are dimensioned and positioned to allow access to control ports or other features of the mobile device. Those skilled in the art will appreciate that a variety of hinged stands or flaps and access opening configurations may be utilized in accordance with the present invention.

The accompanying drawings, which are incorporated in and constitute a portion of this specification, illustrate embodiments of the invention and, together with the detailed description, serve to further explain the invention. The embodiments illustrated herein are presently preferred; however, it should be understood, that the invention is not limited to the precise arrangements and instrumentalities shown. For a fuller understanding of the nature and advantages of the invention, reference should be made to the detailed description in conjunction with the accompanying drawings.

### DESCRIPTION OF THE DRAWINGS

In the various figures, which are not necessarily drawn to scale, like numerals throughout the figures identify substantially similar components.
Fig. 1 is a front perspective view of a detachable phone wallet in accordance with the present invention shown magnetically coupled to an electronic device or smart phone;
Fig. 2 is a back side perspective view of a detachable phone wallet in according with the present invention and shown magnetically coupled to a smart phone;
Fig. 3 is a front perspective view of a detachable phone wallet in according with the present invention and shown magnetically coupled to a smart phone;
Fig. 4 is a front side perspective view of a detachable phone wallet in according with the present invention and shown magnetically coupled to a smart phone;
Fig. 5 is a partial exploded perspective view of a detachable phone wallet in accordance with the present invention;
Fig. 6 is a back perspective view of the detachable phone wallet of the type shown in Figure 5;
Fig. 7 is a back end perspective view of a detachable phone wallet in accordance with the present invention;
Fig. 8 is a front side perspective view of a detachable phone wallet in accordance with the present invention shown having the hinged panel cover in a partial open or support stand position;
Fig. 9 is a top front perspective view of a detachable phone wallet in accordance with the present invention shown having the hinged panel cover in a partial open or support stand position;
Fig. 10 is a front perspective view of a detachable phone wallet in accordance with the present invention shown having the hinged panel cover removed;
Fig. 11 is a front perspective view of an alternative detachable phone wallet in accordance with the present invention and shown encompassing a portion of a smart phone;
Fig. 12 is a back perspective view of an alternative detachable phone wallet in accordance with the present invention and shown encompassing a portion of a smart phone;
Figs. 13 is a back perspective view of a detachable phone wallet of the type shown in Figure 12 and shown having the smart phone removed;
Fig. 14 is a front perspective view of an alternate detachable phone wallet in accordance with the present invention;
Fig. 15 is a front perspective view of an alternate detachable phone wallet in accordance with the present invention and shown having the hinged panel cover in a partial open or support stand position;
Fig. 16 is a perspective view of a phone casing in accordance with the present invention shown having the detachable phone wallet removed from the phone casing pocket and having a wireless charger aligned and engaged with a phone contained within the casing;
Fig. 17 is a perspective view of a phone casing in accordance with the present invention shown having the detachable phone wallet removed from the phone casing pocket and having a wireless charger aligned within the pocket of the casing;
Fig. 18 is a back perspective view of a phone casing in accordance with the present invention shown having the detachable phone wallet removed from the phone casing pocket and having a wireless charger aligned within the pocket of the casing;
Fig. 19 is a left side perspective view of a phone casing in accordance with the present invention shown having the detachable phone wallet removed from the phone casing pocket and having a wireless charger aligned within the pocket of the casing; and
Fig. 20 is a right side perspective view of a phone casing in accordance with the present invention shown having the detachable phone wallet removed from the phone casing pocket and having a wireless charger aligned within the pocket of the casing.

### DETAILED DESCRIPTION

The following description provides detail of various embodiments of the invention, one or more examples of which are set forth below. Each of these embodiments are provided by way of explanation of the invention, and not intended to be an undue limitation of the invention. Further, those skilled in the art will appreciate that various modifications and variations may be made in the present invention without departing from the scope or spirit of the invention. By way of example, those skilled in the art will recognize that features illustrated or described as part of one embodiment, may be used in another embodiment to yield a still further embodiment. Thus, it is intended that the present invention also cover such modifications and variations that come within the scope of the appended claims and their equivalents.

In an embodiment of the invention a slender and compact detachable phone wallet 10 is provided that minimizes the bulkiness and weight of a larger wallet and may also include a phone casing 84 that encompasses the back and sides of a mobile phone to offer impact protection and additional versatility. The detachable phone wallet 10 for a mobile electronic device 96 is configured to be user easily removed and reattached, allowing a user to wirelessly charge the phone battery without removing the casing from the phone.

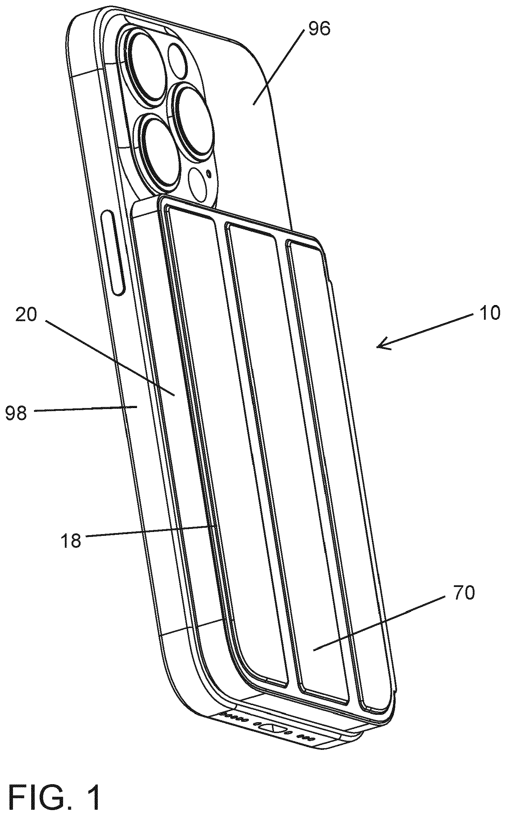

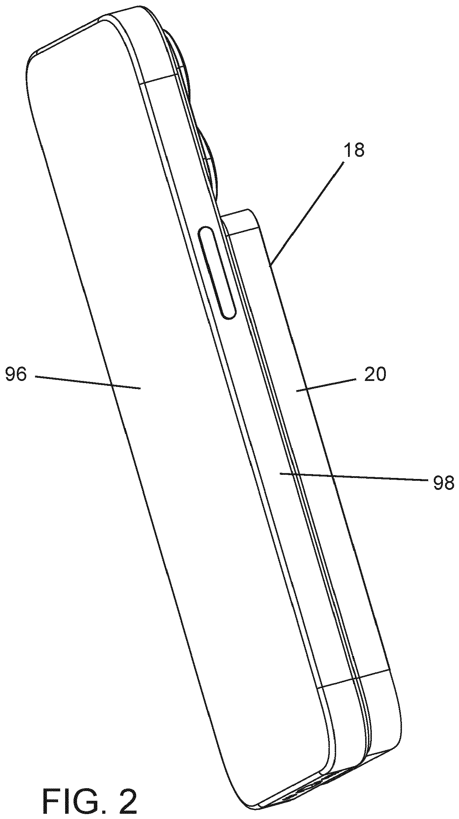

With reference to the Figures various aspects of the invention will be further described. Figures 1-2 illustrate an exemplary mobile electronic device 96 magnetically coupled with an embodiment of the detachable phone wallet 10 of the present invention. The width between the sides 20 of the detachable phone wallet is dimensioned to be equal to or less than the width between sides 98 of the mobile device 98. The length of the phone wallet is sized such that when it is attached to a mobile device it does not block or interfere with the phone accessories such as camera lens. The thickness is dimensioned to provide storage capacity within the wallet while keeping the overall thickness of the wallet to be relatively thin. In a preferred embodiment the thickness of the wallet 10 is equal to or less than the mobile device 96 to which it attaches.

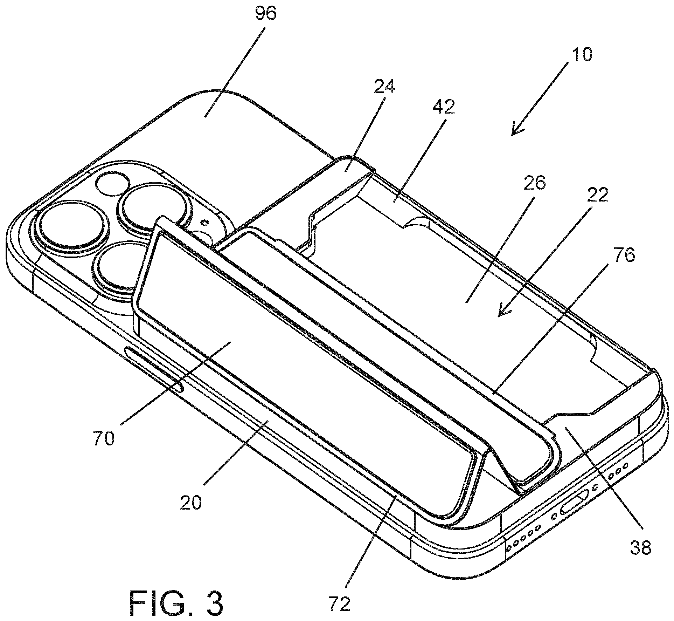

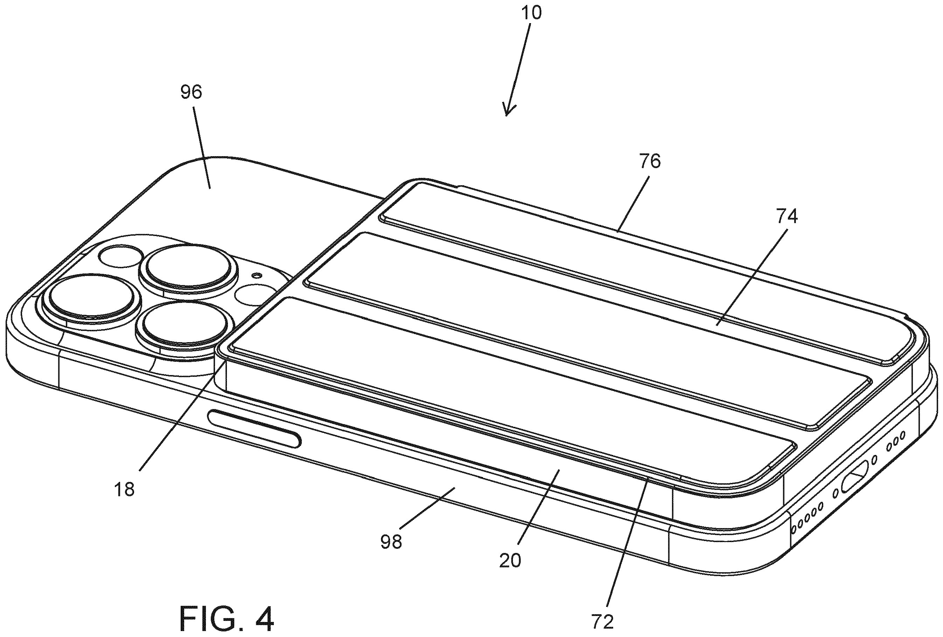

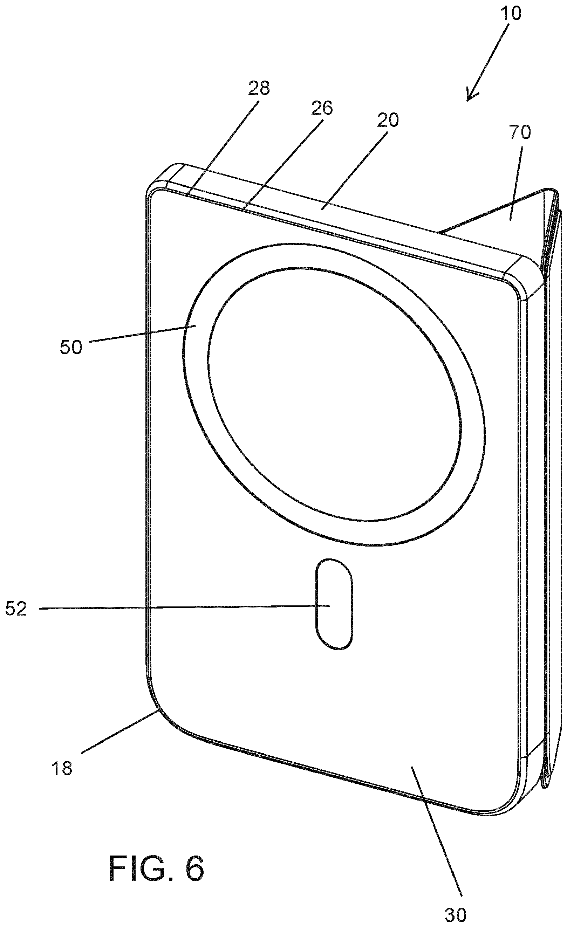

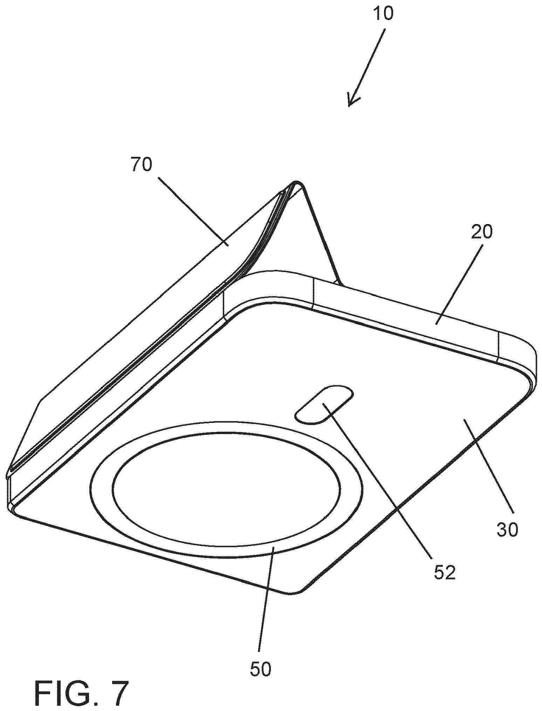

With reference to Figures 3-7 the detachable phone wallet 10 is adhered to the mobile electronic device 96 by means of magnetic attraction. The phone wallet 10 includes a rigid body 18, a panel cover 70, alignment magnets 50 and 52, and panel cover magnets 56. The rigid body 18 has a cavity 22 formed into the rigid body 18 such that the rigid body 18 has an open end or open front 32 and a closed end or closed back side 34. The closed end or back side 34 of the rigid body 18 is comprised of a base portion or layer 26 and a backing portion or outer layer 28. The outer surface 30 or back side of the rigid body 18 contacts the back surface of the phone 96 when magnetically coupled to the phone.

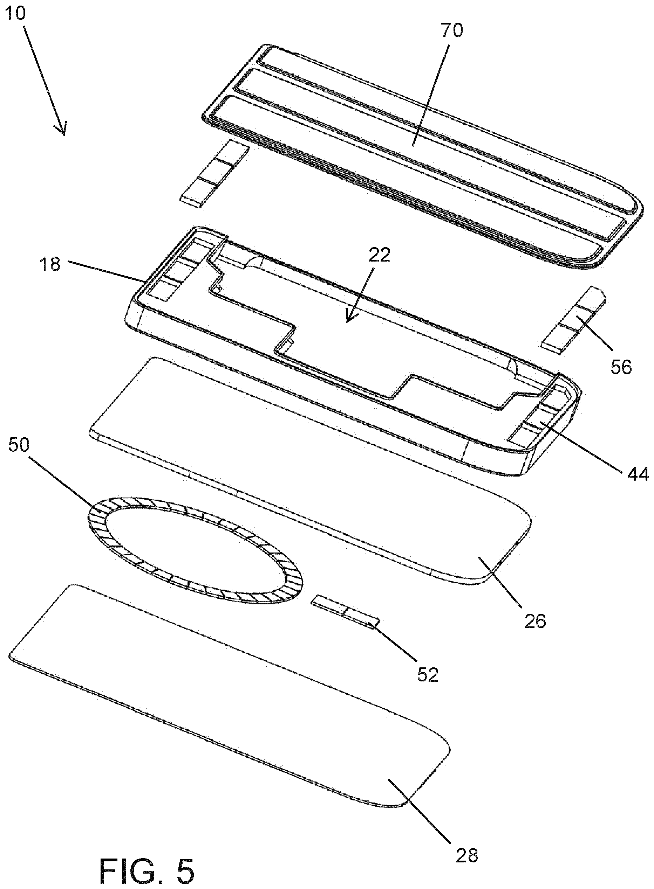

Figures 5-7 further illustrate the orientation of the alignment magnets 50 and 52 relative to the rigid body 18. The alignment magnets 50 and 52 are sandwiched between the base portion 26 and backing portion 28 of the rigid body 18. The backing portion 28 forms an exterior of the rigid body 18 is relatively thin such that the strength of the magnetic fields from alignment magnets 50 and 52 are not significantly reduced. Without limitation intended, the backing portion 28 and base portion 26 may be layers or films applied to the rigid body or may be formed integral with the rigid body 18. The hinge panel or panel cover 70 has a first end portion 72 that is fixed to an outer surface 24 of the rigid body 18 and further has a second free end 76 portion that is adapted to extend over and cover the open end 32 of the cavity 22.

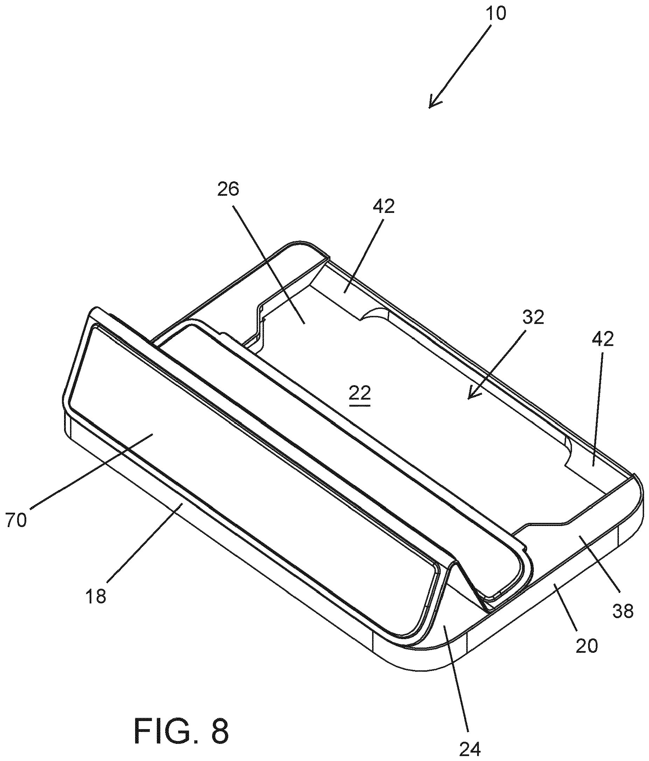

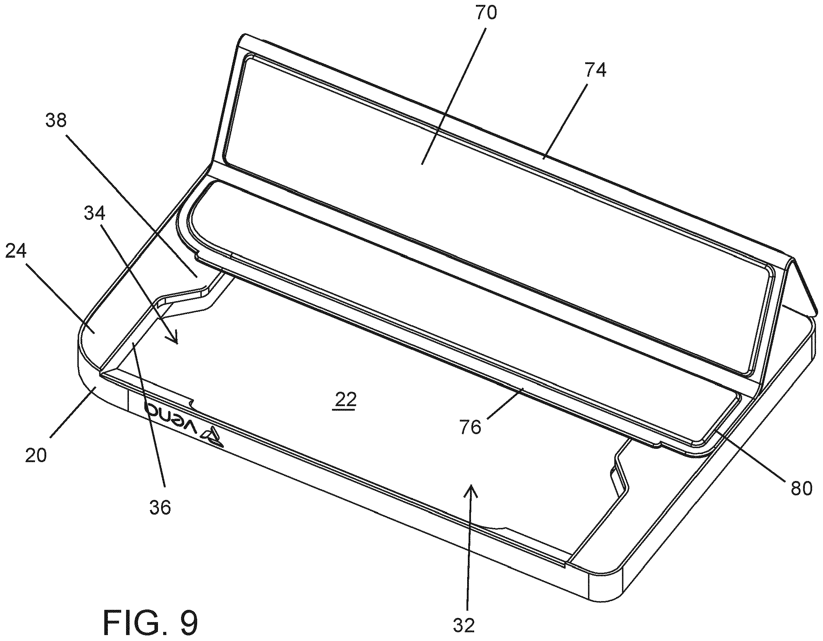

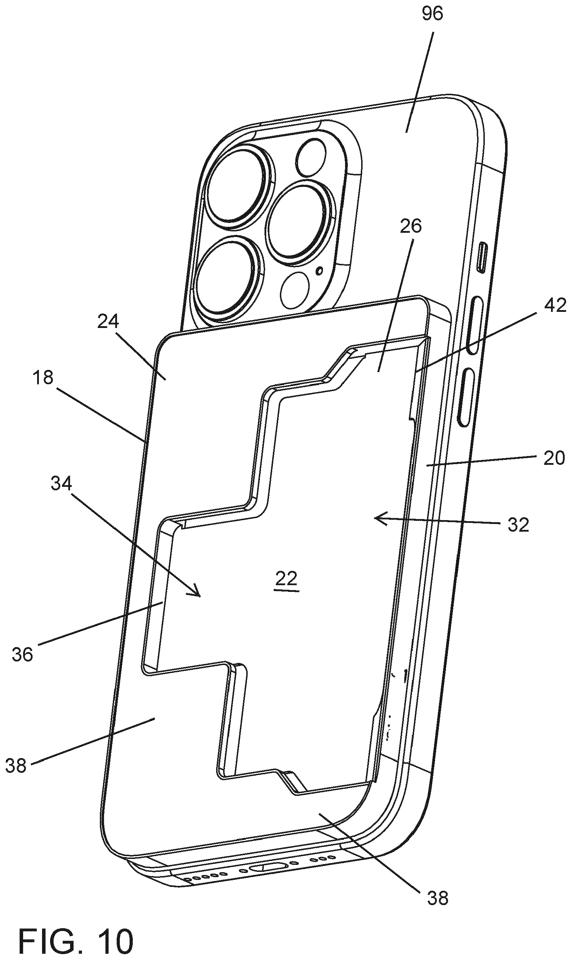

Figures 8-10 further illustrate the cavity or compartment 22 formed in the rigid body 18 of the phone wallet 10. The cavity 22 terminates within the rigid body 18 at a base portion 26 of the rigid body, thereby forming the second closed end 34 of the cavity 22. The cavity includes sides 36 that are dimensioned such that the distance between opposing sides is sufficient to allow insertion of an ID or credit card between the sides. A flange 38 extends out and over the cavity 22 to further define the outer surface 24 of the rigid body 18. The flange 38 further supports the hinge panel 70 and retains items placed within the cavity or compartment 22 (see Figure 10). The front or exposed side of the cavity 22 includes sloped or ramped sides 42. Credit cards or ID's slide up and down the ramp 42 assisting the user to insert and remove cards from the compartment. Pockets 44 are formed in a top surface of the rigid body and are adapted to receive panel magnets 56. The hinge panel 70 includes panel joints 74 and panel sections 80. The panel sections may include metal strips or magnetic strips 80. When the panel is position flat on the outer surface 24 of the rigid body 18, the panel magnets 56 and hinge magnets or metal attract towards each other to help retain the panel cover over the cavity 22 thereby concealing the compartment. The user may further orient the hinge panel 70 to provide a stand for the mobile device 96 (see Figure 3 and Figures 8-9).

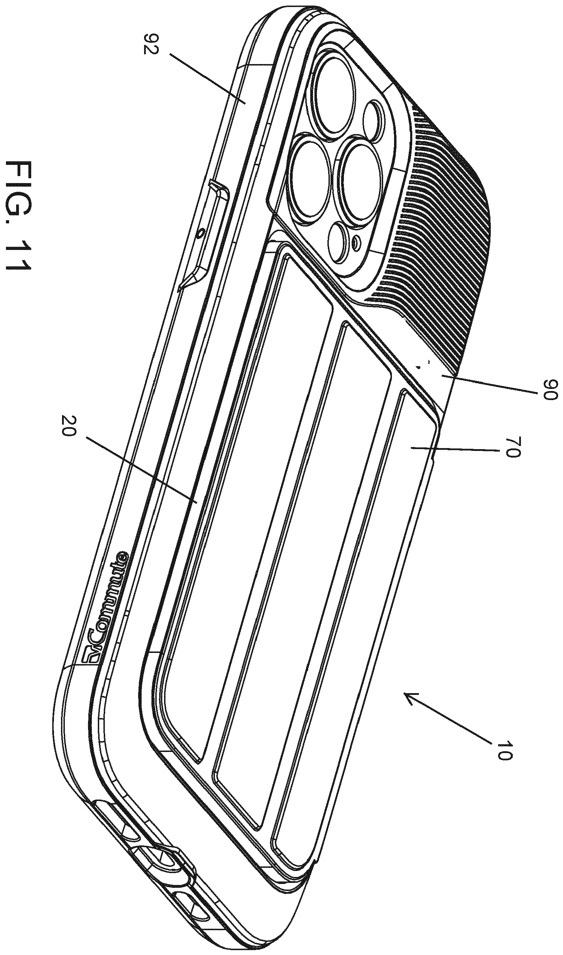

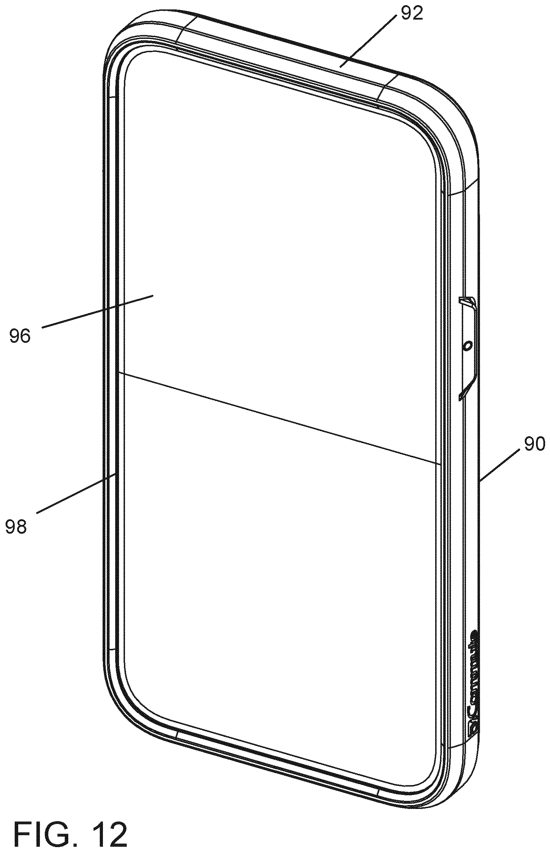

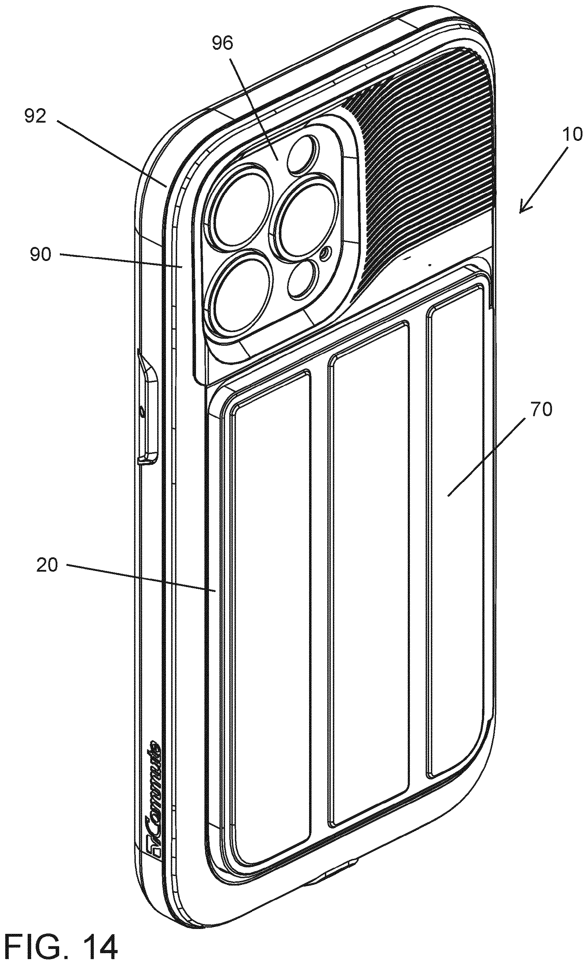

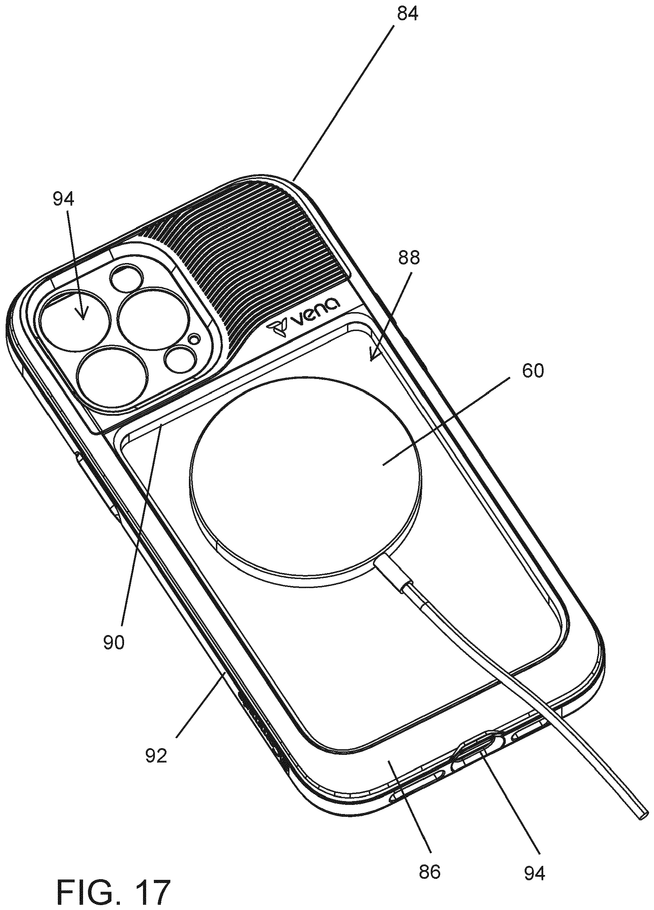

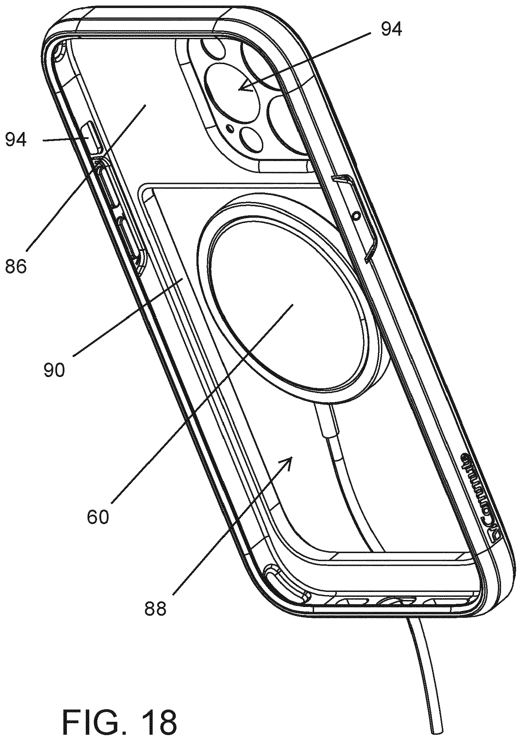

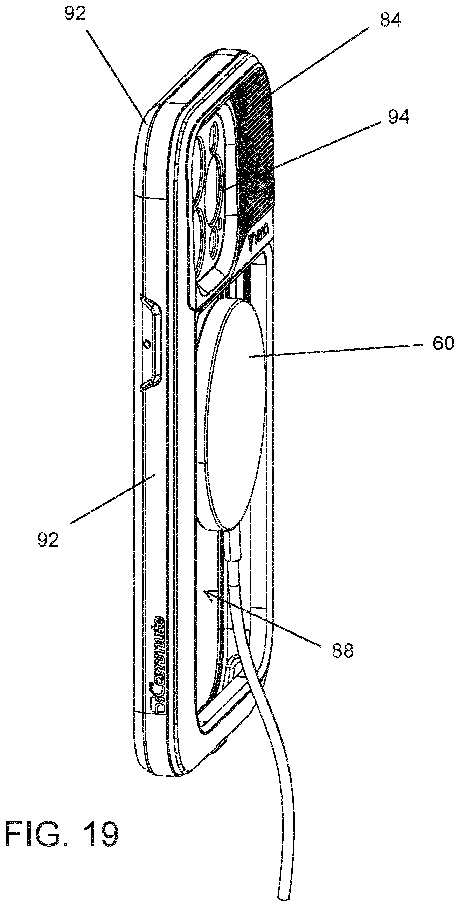

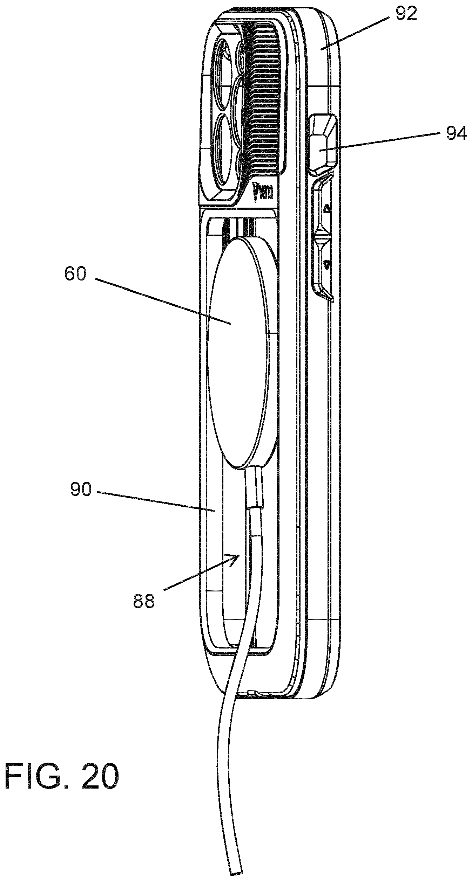

With reference to Figures 11-12 another exemplary detachable phone wallet apparatus 10 of the present invention is shown coupled with a mobile electronic device 96. Those skilled in the art will appreciate that the length, width and thickness of the components of detachable wallet 10 may be modified to accommodate various electronic devices including, without limitation intended, various cell phone makes and models, tablets and laptops. The detachable wallet apparatus 10 (illustrated in Figures 11-20) generally includes a rigid body 18 and phone casing 84. The phone casing includes a pliable body 86 and a pocket 88 formed in the casing. The pocket includes sidewalls 90 that are adapted for receiving and engaging the rigid body 18. An outer rim portion 92 of the pliable body 86 overlaps at least the sides 98 of the mobile device 96 to retain the mobile device 96.

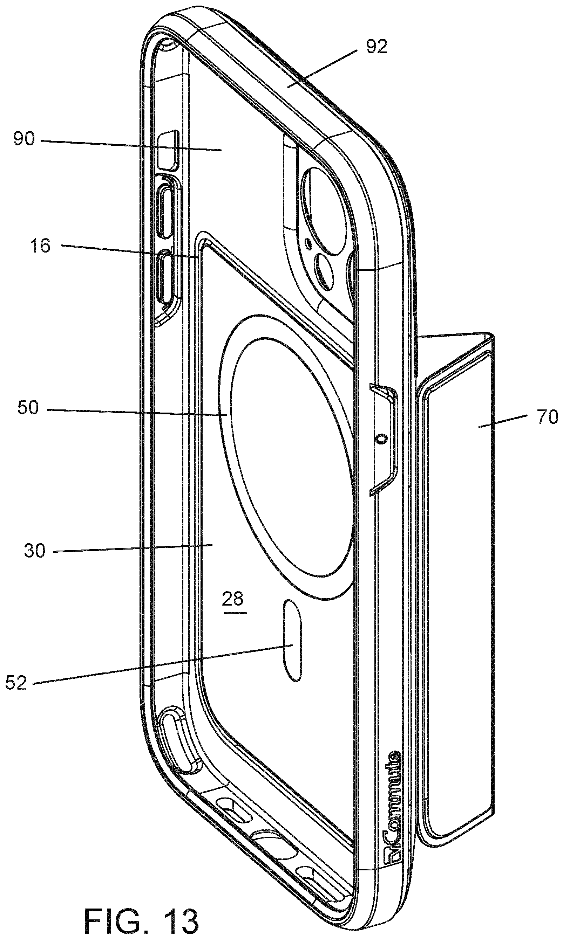

Figures 13-15 further illustrate how the casing 84 and rigid body 18 integrate together to provide a phone wallet that may also act as a protective casing for a phone. The pliable body 86 of the protective phone casing 84 extends outward from the pocket 88 in the same plane as the back face of the rigid body 18 and includes a rim 92 extending orthogonally about a perimeter of the pliable body. The dimensions of the planar casing 84 and rim 92 are such so that sides of a phone may be encompassed, engaged, and encased by the rim 92. Without limitation intended, the casing 84 is pliable in the sense that the rim 92 may be deformed or bent to slip over the sides of a phone and encase the phone sides. Apertures 94 may extend through various locations about the casing 84, pliable body 86, and rim 92. The apertures 94 align with and correspond with various features of the electronic device.

The rigid body 18 has a cavity 22 formed into the rigid body 18 such that the rigid body 18 has an open end or open front 32 and a closed end or closed back side 34. The closed end or back side 34 of the rigid body 18 is comprised of a base portion or layer 26 and a backing portion or outer layer 28. The outer surface 30 or back side of the rigid body 18 contacts the back surface of the phone 96 when magnetically coupled to the phone. Figure 13 illustrates the orientation of the alignment magnets 50 and 52 relative to the rigid body 18. The alignment magnets 50 and 52 are sandwiched between the base portion 26 and backing portion 28 of the rigid body 18. The backing portion 28 forms an exterior of the rigid body 18 is relatively thin such that the strength of the magnetic fields from alignment magnets 50 and 52 are not significantly reduced. Without limitation intended, the backing portion 28 and base portion 26 may be layers or films applied to the rigid body or may be formed integral with the rigid body 18. The hinge panel or panel cover 70 has a first end portion 72 that is fixed to an outer surface 24 of the rigid body 18 and further has a second free end 76 portion that is adapted to extend over and cover the open end 32 of the cavity 22.

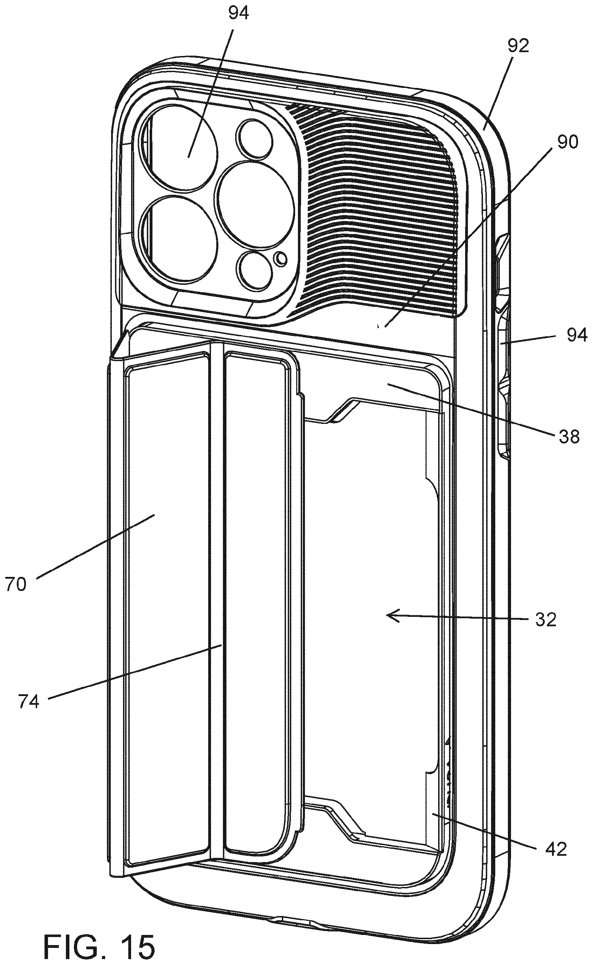

Figure 15 further illustrates the cavity or compartment 22 formed in the rigid body 18 of the phone wallet 10. The cavity 22 terminates within the rigid body 18 at a base portion 26 of the rigid body, thereby forming the second closed end 34 of the cavity 22. The cavity includes sides 36 that are dimensioned such that the distance between opposing sides is sufficient to allow insertion of an ID or credit card between the sides. A flange 38 extends out and over the cavity 22 to further define the outer surface 24 of the rigid body 18. The flange 38 further supports the hinge panel 70 and retains items placed within the cavity or compartment 22. Various configurations of the flange may be provided dependent upon the amount of cavity exposure desired. The front or exposed side of the cavity 22 includes sloped or ramped sides 42. Credit cards or ID's slide up and down the ramp 42 assisting the user to insert and remove cards from the compartment. Pockets 44 are formed in a top surface of the rigid body and are adapted to receive panel magnets 56.

The hinge panel 70 includes panel joints 74 and panel sections 80. The panel sections may include metal strips or magnetic strips 80. When the panel is positioned flat on the outer surface 24 of the rigid body 18, the panel magnets 56 and hinge magnets or metal attract towards each other to help retain the panel cover over the cavity 22 thereby concealing the compartment. The metal strips or magnets cooperate with magnets 56 to fix the panel in a desired position relative to rigid body 18. Those skilled in the art will appreciate the panel 70 may be formed integral with the rigid body 18, may be permanently attached to the rigid body 18 or may be removably attached to the rigid body 18. The hinged panel cover 70 may be oriented in several positions relative to the rigid body. By way of example the hinged panel 70 may be utilized to vary the angle of the display screen of the mobile device 96 when propped on a flat surface. The user may use the length of the panel or an end of the panel to prop the phone. Depending upon whether the user chooses to rest the length or end against the flat surface, the viewing angle may range from 15-45 degrees from vertical or from 20-25 degrees from a horizontal viewing angle.

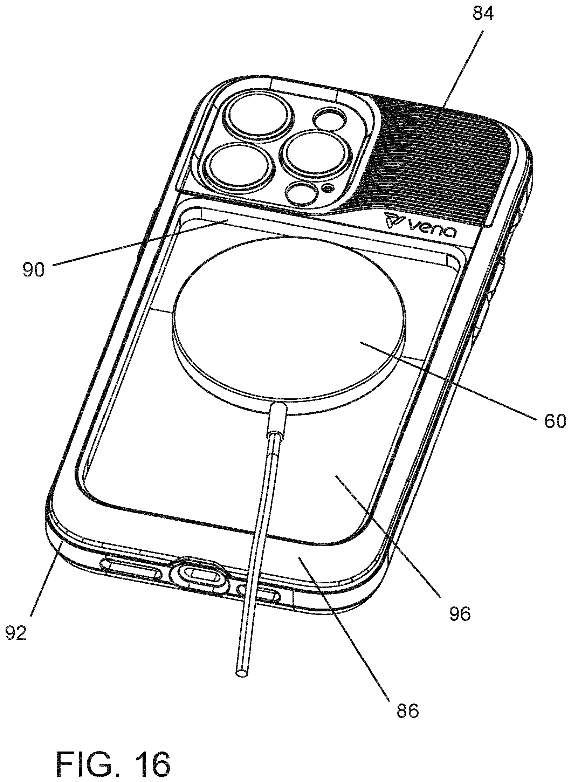

Figures 16-20 further illustrate the casing 84 integrated with the rigid body 18 and the ability to wirelessly charge the batteries of the electronic device 96 without decoupling or removing the casing 84 from the electronic device. The casing 84 includes a planar pliable body 86. A pocket 88 is formed in the casing wherein the pocket has an inner sidewall 90 that is sized slightly larger than the perimeter of the rigid body. The rigid body nests within the pocket of the casing 84 and the magnets fix the rigid body within the pocket. To wirelessly charge the device the user simply removes the rigid body to expose the back side of the phone 96. The user then places charger 60 in contact with the phone 96. The alignment magnets 50 and 52 of the rigid body retain the rigid body and keep it from falling out of the pocket 88 formed in the casing 84.

The various embodiments described herein are illustrative of the present invention and not limiting as to the scope of the present invention These and various other aspects and features of the invention are described with the intent to be illustrative, and not restrictive. This invention has been described herein with detail in order to comply with the patent statutes and to provide those skilled in the art with information needed to apply the novel principles and to construct and use such specialized components as are required. It is to be understood, however, that the invention can be carried out by specifically different constructions, and that various modifications, both as to the construction and operating procedures, can be accomplished without departing from the scope of the invention, as long as these modifications fall within the scope of invention as defined by the appended claims. Further, in the appended claims, the transitional terms comprising and including are used in the open-ended sense in that elements in addition to those enumerated may also be present. Other examples will be apparent to those of skill in the art upon reviewing this document.

## Claims

1. A detachable phone wallet apparatus (10) for coupling to an electronic device (96), the phone wallet apparatus comprising:
a rigid body (18) having a cavity (22) formed therein;
a hinged panel (70) having a first end portion (72) fixed to an outer surface (24) of the rigid body and a second free end portion (76) that is adapted to extend over and cover a first open end (32) of the cavity;
a base portion (26) of the rigid body forming a second closed end (34) of the cavity;
a backing portion (28) of the base portion of the rigid body, wherein the backing portion forms an exterior of the rigid body;
alignment magnets (50, 52) sandwiched between the base portion and backing portion of the rigid body;
panel magnets (56) associated with one of the hinged panel and the rigid body; and
wherein the hinged panel includes a plurality of hinged folds.

2. The phone wallet apparatus (10) as recited in claim 1, further including metal strips associated with the hinged panel (70).

3. The phone wallet apparatus (10) as recited in claim 1 or claim 2, wherein the hinged folds are defined by a plurality of hinged joints.

4. The phone wallet apparatus (10) as recited in any one of the preceding claims, further including flanges (38) blocking outer access to a portion of the cavity (22).

5. The phone wallet apparatus (10) as recited in claim 4 further including a ramped side (42) of the cavity (22).

6. The phone wallet apparatus (10) as recited in claim 5, wherein the ramped side (42) is formed on at least one of the base portion (26) or opposing inner sides of the cavity.

7. The phone wallet apparatus (10) as recited in any one of the preceding claims, further including a casing (84) having a pliable body (86), the pliable body having a rim (92) extending about a perimeter of the pliable body, wherein the rim of the pliable body is adapted for engaging sides of an electronic device (96), and further having a pocket (88) extending though the pliable body wherein the pocket is adapted for receiving the rigid body therein.

8. The phone wallet apparatus (10) as recited in claim 7, wherein the casing (84) further includes apertures (94) extending through the pliable body (86) and oriented to align with features of the electronic device (96).

## Patentansprüche

1. Abnehmbare Brieftascheneinrichtung für ein Mobiltelefon (10) zum Koppeln an eine elektronische Vorrichtung (96), wobei die Brieftascheneinrichtung für ein Mobiltelefon umfasst:
einen starren Korpus (18) mit einem darin gebildeten Hohlraum (22);
eine schwenkbare Platte (70) mit einem ersten Endabschnitt (72), welcher an einer Außenfläche (24) des starren Korpus befestigt ist, und einem zweiten, freien Endabschnitt (76), welcher dazu adaptiert ist, sich über das erste, offene Ende (32) des Hohlraums zu erstrecken und diesen zu bedecken;
einen Basisabschnitt (26) des starren Korpus, welcher ein zweites, geschlossenes Ende (34) des Hohlraums bildet;
einen Stützabschnitt (28) des Basisabschnitts des starren Korpus, wobei der Stützabschnitt eine Außenseite des starren Korpus bildet;
Ausrichtungsmagnete (50, 52), welche zwischen dem Basisabschnitt und dem Stützabschnitt des starren Korpus eingefügt sind;
Plattenmagnete (56), welche mit einem der schwenkbaren Platte und dem starren Korpus verbunden sind; und
wobei die schwenkbare Platte eine Vielzahl von Falzen beinhaltet.

2. Brieftascheneinrichtung für ein Mobiltelefon (10) nach Anspruch 1, weiter Metallstreifen beinhaltend, welche mit der schwenkbaren Platte (70) verbunden sind.

3. Brieftascheneinrichtung für ein Mobiltelefon (10) nach Anspruch 1 oder Anspruch 2, wobei die schwenkbaren Falze durch eine Vielzahl von Scharniergelenken definiert sind.

4. Brieftascheneinrichtung für ein Mobiltelefon (10) nach einem der vorstehenden Ansprüche, weiter Flansche (38) beinhaltend, welche äußeren Zugriff auf einen Abschnitt des Hohlraums (22) blockieren.

5. Brieftascheneinrichtung für ein Mobiltelefon (10) nach Anspruch 4, weiter eine abgeschrägte Seite (42) des Hohlraums (22) beinhaltend.

6. Brieftascheneinrichtung für ein Mobiltelefon (10) nach Anspruch 5, wobei die abgeschrägte Seite (42) auf zumindest einem von dem Basisabschnitt (26) oder gegenüberliegenden Seiten des Hohlraums gebildet ist.

7. Brieftascheneinrichtung für ein Mobiltelefon (10) nach einem der vorstehenden Ansprüche, weiter ein Gehäuse (84) mit einem biegsamen Korpus (86) beinhaltend, wobei der biegsame Korpus einen Rand (92) aufweist, welcher sich rund um einen Umfang des biegsamen Korpus erstreckt, wobei der Rand des biegsamen Korpus dazu adaptiert ist, in Seiten einer elektronischen Vorrichtung (96) einzugreifen, und weiter eine Tasche (88) aufweist, welche sich durch den biegsamen Korpus erstreckt, wobei die Tasche dazu adaptiert ist, den starren Korpus darin aufzunehmen.

8. Brieftascheneinrichtung für ein Mobiltelefon (10) nach Anspruch 7, wobei das Gehäuse (84) weiter Öffnungen (94) beinhaltet, welche sich durch den biegsamen Korpus (86) erstrecken und so orientiert sind, dass sie mit Merkmalen der elektronischen Vorrichtung (96) ausgerichtet sind.

## Revendications

1. Appareil portefeuille pour téléphone détachable (10) destiné à être couplé à un dispositif électronique (96), l'appareil portefeuille pour téléphone comprenant :
un corps rigide (18) dans lequel est formée une cavité (22) ;
un panneau articulé (70) présentant une première partie d'extrémité (72) fixée à une surface externe (24) du premier corps rigide et une seconde partie d'extrémité libre (76) qui est adaptée pour s'étendre sur et recouvrir la première extrémité (32)de la cavité ;
une partie de base (26) du corps rigide formant une seconde extrémité fermée (34) de la cavité ;
une partie de support (28) de la partie de base du corps rigide, dans lequel la partie de support forme un extérieur du corps rigide ;
des aimants d'alignement (50, 52) pris en sandwich entre la partie de base et la partie de support du corps rigide ;
des aimants de panneau (56) associés à l'un parmi le panneau articulé et le corps rigide ; et
dans lequel le panneau articulé comporte une pluralité de plis articulés.

2. Appareil portefeuille pour téléphone (10) selon la revendication 1, comportant en outre des bandes métalliques associées au panneau articulé (70).

3. Appareil portefeuille pour téléphone (10) selon la revendication 1 ou la revendication 2, dans lequel les plis articulés sont définis par une pluralité de joints articulés.

4. Appareil portefeuille pour téléphone (10) selon l'une quelconque des revendications précédentes, comportant en outre des rebords (38) bloquant l'accès extérieur à une partie de la cavité (22).

5. Appareil portefeuille pour téléphone (10) selon la revendication 4 comportant en outre un côté incliné (42) de la cavité (22).

6. Appareil portefeuille pour téléphone (10) selon la revendication 5, dans lequel le côté incliné (42) est formé sur au moins l'un de la partie de base (26) ou des côtés internes opposés de la cavité.

7. Appareil portefeuille pour téléphone (10) selon l'une quelconque des revendications précédentes, comportant en outre un boîtier (84) ayant un corps pliable (86), le corps pliable ayant un rebord (92) s'étendant autour d'un périmètre du corps pliable, dans lequel le bord du corps pliable est adapté pour venir en prise sur les côtés d'un dispositif électronique (96), et comporte en outre une poche (88) s'étendant à travers le corps pliable, dans lequel la poche est adaptée pour recevoir le corps rigide à l'intérieur.

8. Appareil portefeuille pour téléphone (10) selon la revendication 7, dans lequel le boîtier (84) comporte en outre des ouvertures (94) s'étendant à travers le corps pliable (86) et orientées pour s'aligner avec les caractéristiques du dispositif électronique (96).
